# EUROPEAN PATENT SPECIFICATION

(11) **EP 0 518 449 B1**
(45) Date of publication and mention of the grant of the patent: **02.11.1995**
(21) Application number: 92202452.6
(22) Date of filing: 28.06.1990
(51) Int. Cl.: G03H 1/02, H04Q 3/52, G02F 1/135

(54) **Optical interconnection apparatus**
Anordnung zur optischen Verbindung
Dispositif d'interconnexion optique

(30) Priority: 28.06.1989 JP 166254/89; 10.08.1989 JP 207483/89; 06.04.1990 JP 92882/90; 06.04.1990 JP 92883/90
(43) Date of publication of application: 16.12.1992
(62) Divisional of application: 90307083.7
(73) Proprietor: SEIKO INSTRUMENTS INC., Tokyo 136 (JP)
(72) Inventor: Iwaki, Tadao, c/o Seiko Instruments Inc., Koto-ku (JP); Mitsuoka, Yasuyuki, c/o Seiko Instruments Inc., Koto-ku (JP)
(74) Representative: Sturt, Clifford Mark

(56) References cited:
- WO-A-87/00642
- US-A- 3 847 465
- US-A- 4 052 119
- REVUE DE PHYSIQUE APPLIQUEE vol. 22, no. 10, October 1987, PARIS FR, pp. 1301-1307; D. COMTE et al.: "Communication par crossbar optique dans une architecture informatique massivement parallèle"
- APPLIED OPTICS vol. 27, no. 11, 1 June 1988, NEW YORK US, pp. 2093-2096; P. YEH et al.: "Optical interconnection using photorefractive dynamic holograms"
- APPLIED PHYSICS LETTERS vol. 20, no. 1, 1 January 1972, NEW YORK US, pp. 47-49; T.K. GAYLORD et al.: "Optically erasable and rewritable solid-state holograms"

## Description

The present invention relates to an optical interconnection apparatus, e.g. for effective switching of optical paths in optical information processing, optical communication and optical measurement.

Much effort has been employed to realize a real-time hologram by using a light addressed liquid crystal light valve. The light addressed liquid crystal light valve mainly utilizes twist nematic liquid crystal (TN type liquid crystal). Further, the known light addressed liquid crystal light valve utilizes a photoconductive layer composed of bismuth silicate crystal (Bi₁₂ SiO₂₀ crystal) to record a hologram in order to reduce the wave number pitch of hologram interference fringes and to improve recording density and contrast of reconstructed image, thereby achieving a recording density of 50 - 60 ℓp/mm and a reconstructed image contrast 1:30, as disclosed in A.A. Vasil'ev et al., Sov. J. Quantum Electron 14(2), Feb 276 - 277 (1984).

However, holographic apparatus utilizing the known light addressed liquid crystal light valve has a slow speed of recording and reproducing of about several hundreds msec and has insufficient contrast of the reconstructed image. Further, the known apparatus has a handling problem. For example, the light addressed liquid crystal light valve has to be stored in a dark space while a voltage is applied thereto in order to maintain the hologram for a long time. Moreover, there is another problem that an extremely large interferometer is needed due to a small angle between the reference light and the signal light.

Optical interconnection has been studied as a basically important technology in the field of optical information processing, optical communication and optical measurement. Optical information processing has a key technology such as optical interconnection between OEICs and interconnection between nurons in nural network. Such interconnection has been realized by using holograms formed by a silver salt photograph, thermoplastic or nonlinear optical crystal such as BaTi0₃ single crystal. In the field of optical communication and optical measurement, switching of the optical path and spectrometer are usually carried out with a mirror, a half mirror prism or a diffraction grating. Further, in the optical communication field, holography such as mentioned above in the optical information processing can be utilized for optical interchanging.

However, with regard to the known optical separating element such as a mirror, a half mirror prism and a diffraction grating, the light path is generally fixed,and selective switching of the light path is carried out by mechanical means, thereby causing problems such as low switching speed and difficult adjustment. A hologram using a silver salt photographic plate has a similar problem in that the switching of light path is difficult. With regard to a hologram using thermoplastics or a nonlinear optical crystal such as a BaTi0₃ single crystal, selective switching of the light path is possible, but the thermoplastics needs a great driving current and has a long response time of the order of several hundreds msec at least. The BaTi0₃ single crystal is operated in the temperature range of about 20° - 130°C, and therefore it cannot be used at a lower temperature range. Further, it has problems such as the size of the crystal is limited and the crystal is rather expensive.

The present invention is defined in claim 1. According to the present invention, there is provided an optical interconnection apparatus for recording interference fringes caused between coherent signal input light and reference light on a hologram recording medium to form a hologram and for selectively reconstructing output light from the hologram to effect optical interconnection between the input and output light, characterized in that the apparatus includes an optical system which generates signal input light having optical shutter means for controlling blockage and transmission of light so as to generate at least one signal input light beam and the hologram recording medium comprises a light addressed liquid crystal light valve composed of a photoconductive layer, a pair of liquid crystal alignment layers, a ferroelectric liquid crystal layer having a bistable memory characteristic between its reflectivity and an applied voltage, means for applying the voltage, and a pair of transparent substrates.

Preferably, the light addressed liquid crystal light valve incorporates an optical reflective or shielding layer.

The optical shutter means may for example comprise a plurality of optical shutters for producing a plurality of signal input beams.

Alternatively, the apparatus may comprise a light splitter which divides incident light into beams one of which is directed onto an optical shutter and the other of which forms a reference beam; and means for causing the said one beam to interfere with the reference beam to form a hologram on the light addressed liquid crystal light valve.

Thus in its preferred form, the apparatus of the present invention includes an optical system which generates input light, optical shutters being provided to control blocking and transmission of light for generating more than one input light. The hologram recording medium is comprised of a light addressed liquid crystal light valve composed of a photoconductive layer, an optical reflection layer, a pair of liquid crystal alignment layers, a ferroelectric liquid crystal layer having a bistable memory characteristic between its optical reflectivity and an applied voltage, means for applying the voltage, and a pair of transparent substrates. By means of such a construction, the hologram is momentarily recorded and erased to divide input light selectively for getting a desired output optical path to thereby effect optical interconnection. Converging or diverging reference light can be utilized to produce converging or diverging output light. Further, an incident angle between the input and reference lights can be set to a given degree to effect spectral separation, thereby providing an optical interconnection apparatus of the general purpose type for use in optical information processing, optical communication and optical measurement.

By such a construction, fast selective switching of optical paths can be achieved at a response time less than 500µsec. The operating range is broadened from - 20°C to 60°C, sufficient to enable operation at room temperature. The effective area of the hologram recording medium is broadened more than 4cm² to provide a cheap optical interconnection apparatus, thereby solving the problem of the prior art noted above.

In operation, the optical system generating the signal input light is provided with an optical shutter to control blocking and passing of light. The shutter is held open to pass the reference and input light to effect interference therebetween on the photoconductive layer of the light addressed liquid crystal light valve to thereby form thereon the hologram effective to carry out the optical interconnection or distribution. A read light irradiates the hologram on a reading face of the light addressed liquid crystal light valve such that the read light is diffracted by the hologram to produce the output light in a desired direction. Therefore, in order to interfere between the reference and input light at different incident angles, the optical system generating the input light is provided with the optical shutter to enable controlling of blocking and passing of the plural lights for selecting the incident angle according to a direction of the output light to record and erase the hologram sequentially to thereby selectively switch between multiple output light paths.

The invention is illustrated, merely by way of example, in the accompanying drawings, in which:-
Figure 1 is a schematic diagram showing an embodiment of the optical interconnection apparatus of the present invention;
Figure 2 is a sectional view of a light addressed liquid crystal light valve utilized in the optical interconnection apparatus of the present invention;
Figure 3 is a schematic diagram showing a modification of the embodiment of Figure 1 where the optical interconnection apparatus of the present invention is used for a converging distribution of light;
Figure 4 is a schematic diagram showing another modification of the embodiment of Figure 1 where the optical interconnection apparatus of the present invention is used for multi-interconnection; and
Figure 5 is a graph showing the relationship between the interconnection efficiency and the incident angle of the input beam relative to the reference beam in the optical interconnection apparatus of the present invention.

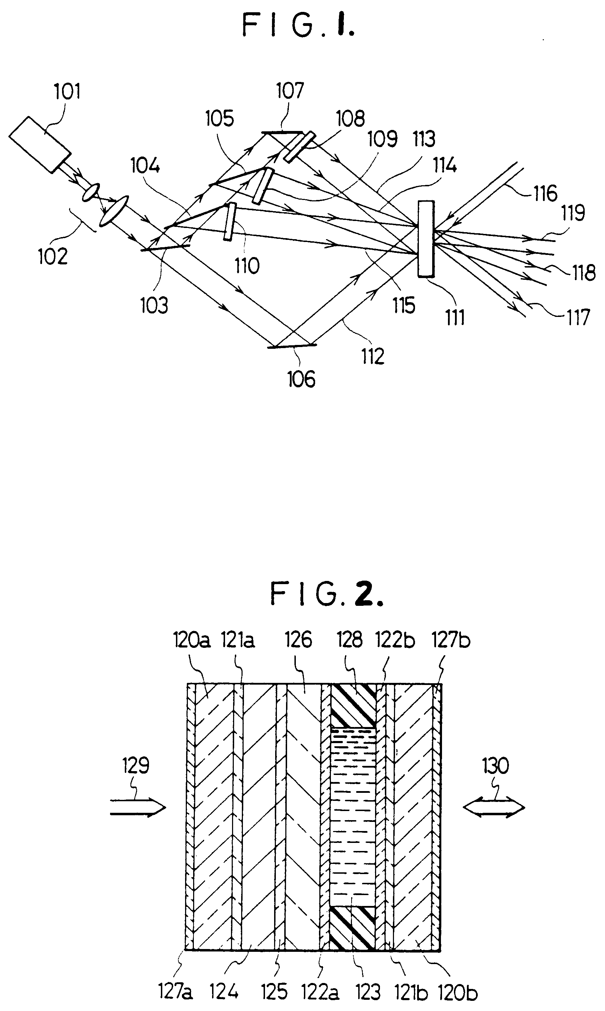

Figure 1 shows an embodiment of the optical interconnection apparatus of the present invention which has three optical systems generating input beams. In Figure 1, a laser beam emitted from a laser source 101 is expanded by a beam expander 102 into a given beam diameter, and then enters into a first half-mirror 103 which divides the beam into a signal input beam and a reference beam. If a light addressed liquid crystal light valve 111 needs a relatively small hologram formation area, the beam expander 102 can be removed. One of the divided beams from the first half-mirror 103 is reflected by a first mirror 106 and then irradiates a writing face of a light addressed liquid crystal light valve 111 in the form of a reference beam 112. The other divided beam from the first half-mirror 103 is sequentially divided and reflected by a second half-mirror 104, a third half-mirror 105 and a second mirror 107 to thereby enter concurrently into a first optical shutter 108, a second optical shutter 109 and a third optical shutter 110. At this stage, when the first shutter 108 is held open and the other shutters 109 and 110 are closed, the laser light passes only through the first shutter 108 to irradiate the writing face of the light valve 111 by means of a first input or signal beam 113, where the first input beam 113 interferes with the reference beam 112 to form a hologram on the light valve 111. In this state, light from a source beam 116 irradiates a reading face of the light valve 111 in the opposite direction to the reference beam 112 such that the source beam 116 is diffracted by the hologram to produce a first output beam 117 in the same direction as that of the first input beam 113.

In a similar manner, when the second shutter 109 is held open and the other shutters 108 and 110 are closed, the reference beam 112 and a second input or signal beam 114 interfere with each other to form another hologram on the light valve 111. The common source beam 116 is diffracted by this hologram to produce a second output beam 118 in the same direction as that of the second input beam 114. When the third shutter 110 is held open and the other shutters 108 and 109 are closed, the reference beam 112 and a third input or signal beam 115 interfere with each other to form still another hologram on the light valve 111. The source light 116 is diffracted by this hologram to produce a third output beam 119 in the same direction as that of the third input beam 115. By thus controlling light transmission by means of the first shutter 108, second shutter 109 and a third shutter 110, a light path can be momentarily selected to achieve optical selective interconnection. The first half-mirror 103, the second half-mirror 104, the third half-mirror 105, the second mirror 107, the first shutter 108, the second shutter 109 and the third shutter 110 constitute an optical system generating input light for producing more than one input beam.

The laser source 101 is comprised of a helium-neon laser. Otherwise, it can be comprised of an argon ion laser or a semiconductor laser. The first shutter 108, the second shutter 109 and the third shutter 110 are comprised of mechanical shutters. Otherwise, they can be comprised of optical shutters utilizing ferroelectric liquid crystal. Further, each optical system is arranged such that the maximum value of the optical path difference is set less than the coherent length of the laser source 101 between the reference beam path and the respective one of the first input beam path, the second input beam path and the third input beam path.

Since the hologram has the minimum interference fringes 2-4µm, recordable on the light addressed liquid crystal light valve 111 utilized in the optical interconnection apparatus of the present invention, the incident angle is set to 9° at most between the input beam and the reference beam. Further, the intensity ratio is set to 1:1 between the reference beam and each input beam in order to improve the interconnection efficiency.

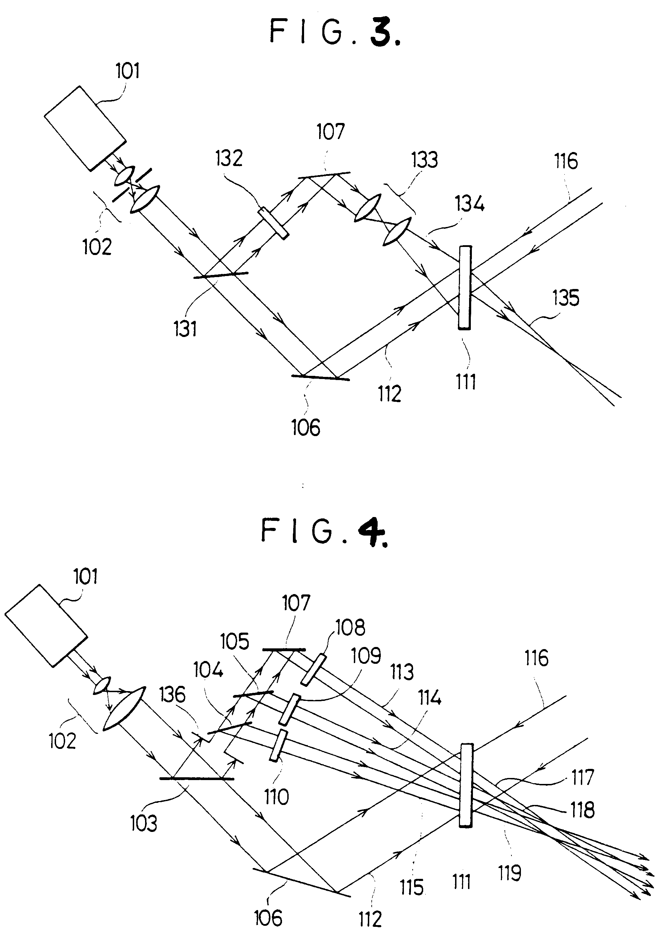

Next, a description is provided of the light addressed liquid crystal light valve utilized as the hologram recording medium of the optical interconnection apparatus of the present invention. Figure 2 is a sectional view of the light addressed liquid crystal light valve utilized in the optical interconnection apparatus of the present invention.

In contrast to the structure of a known liquid crystal light valve, the liquid crystal layer of this light valve is comprised of ferroelectric liquid crystal having bistability of optical transmittance or reflectivity in response to an applied voltage. The liquid crystal layer is sandwiched by a pair of transparent substrates 120a and 120b composed of glass or plastic. The substrates 120a and 120b are formed thereon with respective transparent electrode layers 121a and 121b, and respective alignment layers 122a and 122b formed by oblique evaporation of silicon monoxide at an incident angle from 75° to 85° with respect to normal of the transparent substrate. The pair of transparent substrates 120a and 120b are coupled to each other with a gap controlled by a spacer 128 such that liquid crystal alignment layers 122a and 122b are opposed to each other to sandwich therebetween a ferroelectric liquid crystal layer 123.

Further, a photoconductive layer 124, an optical shielding or reflective layer 125 and a dielectric mirror 126 are sequentially laid in order on the transparent electrode layer 121a of the optical writing side between the electrode layer 121a and the alignment layer 122a. Anti-reflection coatings 127a and 127b are formed on respective outer faces of the writing side transparent substrate 120a and the reading side transparent substrate 120b.

When the transparent electrode layers 121a and 121b are supplied from a DC source (not shown) with a DC bias voltage of the opposite polarity superposed optionally with an AC voltage of 100Hz - 50KHz and being lower than the upper threshold voltage determined for the dark condition and higher than the lower threshold voltage determined for the bright condition, the reference beam 112 and one of the first, second and third signal beams 113, 114, 115 concurrently irradiate to interfere with each other on the writing face of the liquid crystal light valve to provide writing light 129 to thereby form the holographic interference fringes of a hologram.

Then, the photoconductive layer 124 generates carriers therein corresponding to bright bands of the interference fringes, such that the generated carriers drift by the DC bias voltage in the direction of the electric field to thereby reduce locally the threshold voltage. Consequently, a bias voltage of the opposite polarity, which is higher than the lower threshold voltage, is applied to the ferroelectric liquid crystal layer 123 corresponding to the bright bands of the inferference fringes to induce selective inversion of spontaneous dipole of the ferroelectric liquid crystal molecules to thereby selectively switch the one bistable stage to the other bistable state to record the hologram. Such a recorded hologram can be read from the light addressed liquid crystal light valve 111 by a source light having the same wavefront as that of the reference light in the opposite direction to reconstruct the signal light.

Namely, the source light reflected from a region where the bright bands of the holographic interference fringes are recorded is rotated in its plane of polarization by 90°, while the remaining source light is reflected without rotation of the plane of polarization from another region where the dark bands of the holographic interference fringes are recorded. Accordingly, the signal light can be reconstructed from both the wavefront having a 90°-rotated plane of polarization and representative of the interference bright bands, and the other wavefront having a non-rotated plane of polarization and representative of the intereference dark bands or negative holographic interference fringes. Consequently, signal light from the hologram can be reconstructed without optical absorption by the reading light onto the reading face of the liquid crystal light valve 111.

Alternatively, reading light 130 is employed which is a linearly polarized source light having a plane of polarization parallel to (or orthogonal to) the preset alignment direction of liquid crystal molecules. This source light is reflected by the optical reflection layer and passes through a polarizer having a polarization axis arranged orthogonal to (or in parallel to) the polarization direction of the reflected reading light to thereby read the hologram interference fringes in the form of light intensity information to reconstruct the input signal light from the hologram. However, when the hologram interference fringes are read out in the form of optical intensity information, only a part of the source light from the area where the hologram interference fringes are recorded (or the area where they are not recorded) can be utilized to thereby cause reduction of optical interconnection or reproduction efficiency.

The following description is provided for the method of producing the light addressed liquid crystal light valve shown in Figure 2. Transparent glass substrates are provided for the transparent substrates 120a and 120b, which are then formed with the transparent electrode layers 121a and 121b in the form of ITO transparent electrode film. Then, gas whose composition is mainly SiF₄ is subjected to discharge dissociation over the transparent electrode layer 121a on the writing side to form intrinsic hydrogenated amorphous silicon (a - Si : H) having a thickness of 3µm to constitute the photoconductive layer 124.

The shielding layer 125 is provided on the photoconductive layer 124, and Si or Si - Ge and SiO₂ are alternately laid on each other to form the dielectric mirror 126. The shielding layer 125 can be omitted if the reflectivity of the dielectric mirror 126 is large for visible light and sufficient to substantially block the effect of reading light on the photoconductive layer 124. Then, the substrates 120a, 120b are set such that they are tilted relative to an evaporation source silicon monoxide (Si0) by an angle 82° between the normal of the substrates and the evaporation direction. While monitoring the growth rate by means of a film thickness gauge of the quartz crystal oscillator which is opposed normal to the evaporation direction, the liquid crystal alignment layers 122a and 122b are formed by the oblique evaporation on the dielectric mirror 126 and on the transparent electrode layer of the reading side, respectively, at 2000 Å of film thickness. The transparent substrates 120a and 120b are coupled to each other by the spacer 128 which is composed of adhesive containing glass fibre of 1.5µm diameter to control a gap therebetween such that the alignment layers 122a and 122b face each other. The ferroelectric liquid crystal layer 123 is sandwiched between the alignment layers 122a, 122b.

The ferroelectric liquid crystal layer 123 contains a ferroelectric liquid crystal composition composed of ester type SmC liquid crystal mixture in addition to an optically active substance. The ester type SmC liquid crystal mixture is comprised of one part of 4-((4′-octyl)phenyl) benzoic acid (3˝-fluoro, 4˝-octyloxy) phenylester and one part of 4-((4′-oxctyloxy)phenyl) benzoic acid (3˝-fluoro 4˝-octyloxy)phenylester. This mixture is added to 25 weight % of optically active substance of 5-octyloxynaphthalenecarboxylic acid, 1′-cyanoethylester to form the ferroelectric liquid crystal composition.

Further, the photoconductive layer 124 is comprised of hydrogenated amorphous silicon (a - Si : H), which is thermally stable at an processing temperature of the light addressed liquid crystal light valve up to 200°C, which has a high resistivity in the dark condition, and which has a great photoconductivity in the bright condition.

Figure 3 is a schematic diagram showing a modification in which the optical interconnection apparatus of the present invention is applied to an interconnection using converging light. The interconnection using converging light means that a interconnection in which light converges at a particular spot. The interconnection light converges without lenses. The Figure 3 embodiment concerns a single input beam, but it will be quite easy to increase the number of input beams.

In Figure 3, a laser beam emitted from a laser source 101 is expanded by a beam expander 102 into a given beam diameter, and then enters into a half-mirror 131 to divide into two paths. One of the divided beams from the half-mirror 131 is reflected by a first mirror 106 and then irradiates a writing face of a light addressed liquid crystal light valve 111 in the form of a reference beam 112. The other divided beam from the first half-mirror 131 enters into an optical shutter 132. At this stage, when the shutter 132 is held open, the laser light passes through the shutter 132, and then is diverged by a diverging lens system 133 to irradiate, by means of an input signal beam 134, the writing face of the light valve 111, where the input beam 134 interferes with the reference beam 112 to form a hologram on the light valve 111. In this state, a source beam 116 irradiates a reading face of the light valve 111 in the opposite direction to that of the reference beam 112 such that the source beam 116 is diffracted by the hologram to produce an output beam 135 in the same direction as that of the input beam 134. Since the input beam 134 is diverging light, the output beam 135 is converged to a spot which is conjugate with the original diverging point of the input beam 134.

In the Figure 3 optical interconnection apparatus, the shutter 132 is held in the open state so as to form a hologram on the light addressed liquid crystal light valve 111. Then the shutter 132 is turned to the closed state to erase the hologram for the optical switching. The switching time is about 500µsec. This switching time can be reduced below about 100µsec by boosting the output power of the laser source 101 and using a faster magneto-optic shutter as the switching shutter 132. The laser source 101 can be comprised of 20mW helium-neon laser. Further, a converging optical system can be used instead of the diverging optical system 133 in the Figure 3 embodiment so as to form a diverging output beam.

Figure 4 is a schematic diagram showing another modification in which the optical interconnection apparatus of the present invention is applied to multi-interconnection of light beams. Multi-interconnection means that light beams are concurrently interconnected to multi-directions, and is a very important technology in optical interconnection such as OEIC.

The Figure 4 embodiment differs from the Figure 1 embodiment in that the first input beam 113, the second input beam 114 and the third input beam 115 are not superposed on each other on the writing face of the light addressed liquid crystal light valve 111. When at least one of the first optical shutter 108, the second optical shutter 109 and the third optical shutter 110 is held in the transmission state, an output beam is produced in the same direction as that of the input beam which has passed the open optical shutter. Namely, the number of optical shutters in the open state determines the number of output beam paths.

The reference beam 112 and each of the first input beam 113, the second input beam 114 and the third input beam 115 are superposed on each other to interfere on the writing face of the light valve 111, and the incident angle therebetween is set below about 9°. The optical intensity ratio between the reference beam and each input beam is set at about 1:1. The maximum difference in the optical path length therebetween is set below the coherent interference length of the laser source 101 by suitably arranging the respective optical systems. It is confirmed that multi-interconnection into 25 outputs can be achieved with an optical interconnection apparatus similar to the Figure 4 embodiment, thereby enabling OEIC interconnection having up to 25 I/O ports.

The following description is provided for a spectrometer which uses the optical interconnection apparatus shown in Figure 1.

In Figure 1 only the first shutter 108 is held in the open state to form a hologram with the first input beam 113 and the reference beam 112 to record the same on the light addressed liquid crystal light valve 111. Thereafter, the source light 116 in the form of white light irradiates the hologram so that blue light can be observed from the direction of the output beam 119. Then, the recorded hologram is erased from the light valve 111. Thereafter, only the second shutter 109 is held in the open state to record another hologram formed by the second input beam 114 and the reference beam 112 on the light valve 111. The white light irradiates the hologram so that green light can be observed from the direction of the output beam 119. Further, the recorded hologram is again erased from the light valve 111. Thereafter, still another hologram is recorded on the light valve 111 by using the third input beam 115 and the reference beam 112. Then, the source beam 116 in the form of white light irradiates the hologram, so that red-orange light can be observed from the direction of the output beam 119 in Figure 1. The incident angle is set to about 5°, 4° and 3.5° for the first input beam 113, the second input beam 114 and the third input beam 115, respectively, relative to the reference beam 112. The laser source 101 is comprised of an argon ion laser which emits an 514nm laser beam. Accordingly, the optical interconnection apparatus of the present invention can be used as a spectrometer apparatus. However, the recordable wave number of the hologram interference fringes is less than about 200 ℓp/mm on the light addressed liquid crystal light valve 111 used in the spectrometer of the present invention. This wave number is rather less than that of the diffraction grating used in an ordinary spectrometer, so that the wavelength resolution of the separator is inferior to that of an ordinary spectrometer. However, the spectrometer of the present invention may be advantageous for use in optical information processing which does not require high accuracy but does require high speed operation.

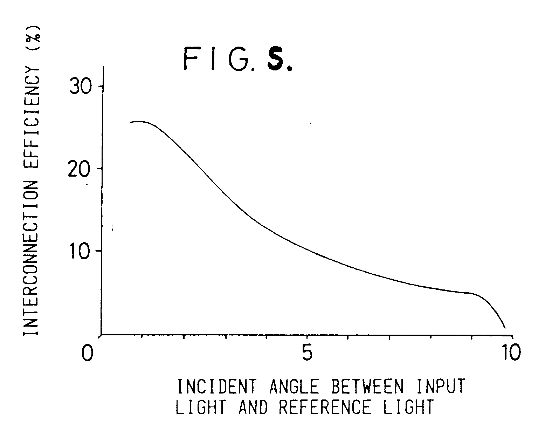

Lastly, a description is provided for interconnection efficiency, i.e. the output/input ratio of the optical interconnection apparatus. Figure 5 shows the relationship between the incident angle of the input beam relative to the reference beam and the interconnection efficiency. Figure 5 is produced by using a writing or input laser source comprised of an argon ion laser having a 514nm wavelength, and a reading or output laser source comprised of helium-neon laser. At this time, the source light has a plane of polarization perpendicular (or parallel) to a wave number vector of the hologram interference fringes recorded on the light addressed liquid crystal light valve. When the plane of polarization of the source light deviates from 90° or 180° relative to the wave number vector, the interconnection efficiency is reduced. Further, by changing the laser beam intensity of the writing laser source, or DC bias voltage, or frequency or amplitude of AC bias voltage so as to vary the threshold voltage of the light valve while recording the hologram, the ratio of bright and dark bands of the holographic interference fringes can be adjusted to get high interconnection or diffraction efficiency.

As shown in Figure 5, the incident angle should be limited to not more than about 9° between the input and reference beams in the optical interconnection apparatus, thereby causing a drawback such as scale-up of the optical system. Such a drawback can be removed by utilizing a Mach-Zehnder interferometer for producing input and reference beams, or by utilizing another interferometer using a hologram formed by a silver salt photograph or holographic recording medium coated with photosensitive resin such as photoresist or dichromate of gelatin. Further, the angular direction of the output beam can be suitably set by selecting the order of the light diffracted by the hologram recorded on the light addressed liquid crystal light valve.

## Claims

1. An optical interconnection apparatus for producing an output beam by recording interference fringes between a coherent signal input light beam (113,114,115) and a reference light beam (112) on a holographic recording medium (111) to form a hologram and by diffracting a read beam from the hologram to produce the output beam (117,118,119), the apparatus including:- an optical system for generating a signal input light beam and a reference beam (112) interfering on a holographic recording medium, optical shutter means (108,109,110) for blocking and transmitting the signal input light beam (113,114,115), characterised in that the recording medium comprises a light addressable liquid crystal light valve (6;111) composed of:
a ferroelectric liquid crystal layer (123) which has optical bistability characteristics in response to an applied voltage;
a pair of liquid crystal alignment layers (122a, 122b) sandwiching the ferroelectric liquid crystal layer;
a photoconductive layer (124);
an optical reflective layer (126) interposed between the photoconductive layer (124) and one of the liquid crystal alignment layers (122a, 122b);
a pair of transparent substrates (120a,120b) sandwiching said layers; and
means (121a,121b) for applying said voltage.

2. An apparatus as claimed in claim 1 characterised in that the light addressed liquid crystal light valve (111) incorporates a shielding layer (125).

3. An apparatus as claimed in claim 1 or 2 characterised in that the optical shutter means comprises a plurality of optical shutters (108,109,110) for switching a plurality of signal input beams (113,114,115).

4. An apparatus as claimed in claim 1 or 2 characterised in that the apparatus comprises a light splitter (131) which divides incident light into signal and reference beams, the signal beam being directed onto said optical shutter means (132); and means (107,133) for causing the said signal beam to interfere with the reference beam (111) to form a hologram on the light addressesd liquid crystal light valve (111).

## Patentansprüche

1. Optische Verbindungseinrichtung zum Erzeugen eines Ausgangsstrahls durch Aufzeichnen von Interferenzstreifen zwischen einem kohärenten Signal-Eingangslichtstrahl (113, 114, 115) und einem Referenz-Lichtstrahl (112) auf einem holographischen Aufzeichnungsmedium (111), um ein Hologramm zu bilden, und durch Beugen eines Ablese-Strahls an dem Hologramm, um den Ausgangsstrahl (117, 118, 119) zu erzeugen, wobei die Einrichtung umfaßt: ein optisches System zum Erzeugen eines Signal-Eingangslichtstrahls und eines Referenz-Strahls (112), welche auf einem holographischen Aufzeichnungsmedium interferieren, ein optisches Verschlußmittel (108, 109, 110) zum Blorkieren und -Transmittieren des Signal-Eingangslichtstrahls (113, 114, 115),
**dadurch gekennzeichnet,**
daß das Aufzeichnungsmedium ein auf Licht ansprechendes Flüssigkristall-Lichtventil (6; 111) umfaßt, welches besteht aus:
einer ferroelektrischen Flüssigkristallschicht (123), welche in Antwort auf eine angelegte Spannung bistabile optische Charakteristiken aufweist,
ein Paar von Flüssigkristall-Ausrichtungsschichten (122a, 122b), zwischen welchen die ferroelektrische Flüssigkristallschicht angeordnet ist,
eine photoleitfähige Schicht (124),
eine optisch reflektierende Schicht (126), welche zwischen der photoleitfähigen Schicht (124) und einer der Flüssigkristall-Ausrichtungsschichten (122a, 122b) angeordnet ist,
ein Paar von transparenten Substraten (120a, 120b), zwischen welchen die Schichten angeordnet sind, und Mittel (121a, 121b) zum Anlegen der Spannung.

2. Einrichtung nach Anspruch 1, dadurch gekennzeichnet, daß das auf Licht ansprechende Flüssigkristall-Lichtventil (111) eine Abschirmungsschicht (125) enthält.

3. Einrichtung nach Anspruch 1 oder 2, dadurch gekennzeichnet, daß das optische Verschlußmittel eine Mehrzahl von optischen Verschlüssen (108, 109, 110) umfaßt zum Schalten einer Mehrzahl von Signal-Eingangsstrahlen (113, 114, 115).

4. Einrichtung nach Anspruch 1 oder 2, dadurch gekennzeichnet, daß die Einrichtung einen Lichtteiler (131) umfaßt, welcher einfallendes Licht in Signal- und Referenzstrahlen aufteilt, wobei der Signalstrahl auf das optische Verschlußmittel (132) gerichtet wird, sowie Mittel (107, 133) zum Bewirken, daß der Signalstrahl mit dem Referenzstrahl (111) interferiert, um ein Hologramm auf dem auf Licht ansprechenden Flüssigkristall-Lichtventil (111) zu bilden.

## Revendications

1. Dispositif d'interconnexion optique destiné à produire un faisceau de sortie en enregistrant des franges d'interférence entre un faisceau (113,114,115) lumineux cohérent de signal d'entrée et un faisceau (112) lumineux de référence sur un support (111) d'enregistrement holographique afin de former un hologramme et en réalisant une diffraction d'un faisceau de lecture à partir de I'hologramme afin de produire le faisceau (117,118,119) de sortie, l'appareil comprenant : un système optique destiné à produire un faisceau lumineux de signal d'entrée et un faisceau (112) de référence qui interférent entre eux sur un support d'enregistrement holographique, et des moyens (108,109,110) d'obturation optique destinés à bloquer et transmettre le faisceau (113,114,115) lumineux de signal d'entrée, caractérisé en ce que le support d'enregistrement comprend un variateur (6;111) de lumière à cristal liquide adressable par la lumière constitué de :
- une couche (123) de cristal liquide ferroélectrique qui a des caractéristiques de bistabilité optique sous l'effet de l'application d'une tension;
- une paire de couches (122a, 122b) d'alignement à cristal liquide entre lesquelles est intercalée la couche de cristal liquide ferroélectrique ;
- une couche (124) photoconductrice ;
- une couche (126) optique réfléchissante intercalée entre la couche (124) photoconductrice et l'une des couches (122a,122b) d'alignement à cristal liquide
- une paire de substrats (120a,120b) transparents entre lesquels sont intercalés les couches; et
- des moyens (121a,121b) destinés à appliquer la tension.

2. Dispositif selon la revendication 1, caractérisé en ce que le variateur (111) de lumière à cristal liquide adressable par la lumière comprend une couche (125) de protection.

3. Dispositif selon la revendication 1 ou 2 caractérisé en ce que les moyens obturateurs optiques comprennent une pluralité d'obturateur (108,109,110) optiques destinés à commuter une pluralité de faisceau (113,114,115) de signal d'entrée.

4. Dispositif selon la revendication 1 ou 2 caractérisé en ce que le dispositif comprend un diviseur (131) de lumière qui divise la lumière incidente en un faisceau de signal et un faisceau de référence, le faisceau de signal étant dirigé sur les moyens (132) obturateurs optiques; et des moyens (107,133) destinés à faire en sorte que le faisceau de signal interfère avec le faisceau (111) de référence afin de former un hologramme sur le variateur (111) de lumière à cristal liquide adressé par la lumière.
